# EUROPÄISCHE PATENTSCHRIFT

(11) **EP 0 947 624 B1**
(45) Veröffentlichungstag und Bekanntmachung des Hinweises auf die Patenterteilung: **14.12.2005**
(21) Anmeldenummer: 99105203.6
(22) Anmeldetag: 12.03.1999
(51) Int. Cl.: D21C 9/18, D21B 1/32, B01D 33/04

(54) **Vorrichtung zum Entwässern einer verunreinigten Faserstoffsuspension**
Apparatus for dewatering a contaminated fibrous suspension
Appareil pour l'égouttage d'une suspension fibreuse contaminée

(30) Priorität: 31.03.1998 US 52022
(43) Veröffentlichungstag der Anmeldung: 06.10.1999
(73) Patentinhaber: Voith Paper Patent GmbH, 89522 Heidenheim (DE)
(72) Erfinder: Lang, Heinrich, 88273 Fronreute-Fronhofen (DE); Johnson, Glen, Joliet, Illinois 60433 (US)

(56) Entgegenhaltungen:
- EP-A- 0 562 930
- DE-A- 3 005 681
- US-A- 4 704 776

## Beschreibung

Die Erfindung bezieht sich auf eine Vorrichtung gemäß dem Oberbegriff des Anspruchs 1.

Vorrichtungen dieser Art weisen Zylinder auf, die an ihrer Oberfläche in direktem Kontakt mit der zu behandelnden Faserstoffsuspension stehen. Sie werden eingesetzt, z.B. in Siebmaschinen, wie sie in der deutschen Patentschrift DE 30 05 681 C2 beschrieben sind. Solche Maschinen dienen der Entfernung von Wasser aus einer Faserstoffsuspension und werden in vielen Fällen dazu eingesetzt, um aus einer Altpapiersuspension einen Teil der unerwünschten Feststoffe herauszuwaschen. Dabei wird in der Regel die Suspension relativ dünnflüssig zugeführt, z.B. mit Feststoffgehalt zwischen 0,5 und 3 %. Bekanntlich enthalten Faserstoffsuspensionen, je nach dem, woraus sie gewonnen wurden, nicht nur Fasern, sondern auch sonstige Bestandteile, die teils erwünscht und teils unerwünscht sind. Je nach Anforderung an das aus der Suspension später hergestellte Produkt soll in vielen Fällen ein Teil dieser Inhaltsstoffe entfernt werden. Hierzu kann das Waschverfahren dienen, also ein Verfahren, bei dem die auszuscheidenden Stoffe zusammen mit Wasser, was zur Genüge in der Suspension vorhanden ist, abgetrennt werden. Unerwünschte Stoffe können außer in Altpapiersuspension auch im Papiermaschinenausschuß oder Frischzellstoff enthalten sein.

Vorrichtungen der angegebenen Art haben sich seit vielen Jahren hervorragend bewährt. Wegen der enthaltenen Schmutzpartikel, z.B. klebenden Bestandteilen oder Farbteilchen in der auszuwaschenden Suspension, kommt es aber oft vor, daß sich Ablagerungen an dem Zylinder bilden, welche sich immer weiter aufbauen und im Betrieb der Vorrichtungen nur schwer entfernbar sind. Zumeist muß die Vorrichtung abgestellt und gereinigt werden, weil die Ablagerungen sonst früher oder später zu Produktionsstörungen führen würden. Zwar wird in den meisten Fällen das an dem Zylinder anhaftende Faservlies mit Hilfe eines Schabers abgenommen, dennoch ist dieser nicht immer in der Lage, auch die erwähnten Ablagerungen mit zu entfernen. Bei mit Rillen versehenen Zylindern ist ein Schaber ohnehin meist nicht zu verwenden. Außerdem entsteht durch einen Schaber, je nach dem, mit welchem Druck er gegen den Zylinder angestellt wird, ein Verschleiß an der Oberfläche des Zylinders, welcher ebenfalls unerwünscht ist. Wenn er wenigstens einen Teil der Ablagerungen erfassen soll, ist jedoch ein relativ hoher Schaberdruck erforderlich.

Der Erfindung liegt die Aufgabe zugrunde, eine Vorrichtung der angegebenen Art zu schaffen, mit der - auch beim Vorhandensein von haftenden Verunreinigungen in der zu behandelnden Faserstoffsuspension - ein störungsfreier Betrieb möglich ist. Ferner soll das Verschleißverhalten des in der Vorrichtung verwendeten Zylinders verbessert werden.

Diese Aufgabe wird durch die im Kennzeichen genannte Maßnahme vollständig gelöst.

Die Keramikbeschichtung des Zylinders bringt nicht nur den Vorteil einer sehr hohen Verschleißfestigkeit, sondern verhindert, daß irgendwelche Bestandteile der Suspension an der Oberfläche des Zylinders festkleben können. Auch wenn ein Schaber zur Abnahme des Faserstoffes vom Zylinder verwendet wird, genügt ein relativ geringerer Druck; dennoch ist es gewährleistet, daß die Oberfläche des Zylinders auf längeren Betrieb ausreichend sauber bleibt.

Es ist grundsätzlich bekannt, bestimmte Teile der Papiermaschine mit einer Keramikschicht zu versehen, um ihre Verschleißfestigkeit zu erhöhen. So werden z.B. im Naßteil, also dort, wo die zur Papiererzeugung vorgesehene Suspension formiert und entwässert wird, stillstehende Keramikleisten verwendet. Diese sind aber nicht in direktem Kontakt mit der Suspension. Sie werden mit einem gewissen Druck gegen die schnellaufenden Papiermaschinensiebe angestellt und unterliegen daher besonders hohem Verschleiß. Wegen der im Siebwasser oft vorhandenen abrasiven Füllstoffe ist der Verschleißschutz an diesen Leisten besonders wesentlich. Es gibt auch Walzen in der Pressenpartie, welche mit einer Keramikschicht versehen sind. Ein solches Beispiel zeigt die US-A- 4,704,776. An dieser Stelle jedoch ist der Papiererzeugungsprozeß bereits so weit fortgeschritten, daß man nicht mehr von einer Suspension, sondern von einer mehr oder weniger festen feuchten Bahn sprechen kann. Aus produktionstechnischen Gründen sind in diesem Bereich nicht nur höhere Stoffdichten, sondern auch beträchtlich höhere Drücke anzutreffen.

Die Erfindung wird erläutert anhand einer Zeichnung, welche in exemplarischer Form den grundsätzlichen Aufbau einer erfindungsgemäßen Vorrichtung zeigt. Diese Darstellung ist nur grob schematisch, da der Aufbau von Vorrichtungen dieser Art bekannt ist.

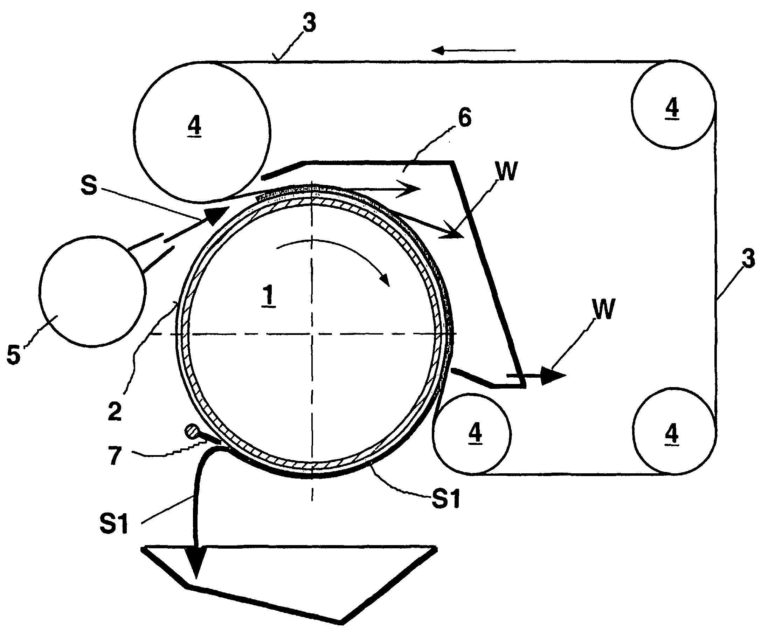

Man erkennt auf der Zeichnung den Zylinder 1, der erfindungsgemäß mit einer Keramikbeschichtung 2 versehen ist. Dieser ist rotierbar in einer Entwässerungsvorrichtung angebracht. Ein umlaufendes Siebband 3, welches über diverse Walzen 4 geführt wird, läuft auf den Zylinder 1 auf, umschlingt ihn, hier über einen Winkel von ca. 120°, und wird dann von der Oberfläche wieder weggeführt. Der Zylinder ist an seinem Außenumfang mit einer Keramikschicht 2 versehen. Die Wandstärke und die Keramikschicht sind nicht maßstäblich dargestellt. Über einen Stoffauflauf, der als Zuführvorrichtung 5 dient, gelangt die Faserstoffsuspension S mit einem Feststoffgehalt zwischen 0,5 und 3 % in den Keil, der sich beim Auflaufen des Siebbandes 3 auf den Zylinder 1 bildet. Die Faserstoffsuspension S wird zwischen dem Zylinder 1 und dem Siebband 3 zusammengedrückt, wobei ein Teil des enthaltenen Wassers W durch das Siebband 3 nach außen abgeschleudert und in der Wasserauffangvorrichtung 6 gesammelt wird. Der so eingedickte Faserstoff S1 hat einen Feststoffgehalt von 4 bis 10 %. Er haftet an der Oberfläche des Zylinders 1 und wird über einen Schaber 7 abgenommen. Es sind auch Fälle bzw. Betriebszustände denkbar, bei denen der eingedickte Faserstoff S1 sich ohne die Wirkung eines Schabers von der Oberfläche des Zylinders 1 löst. Das ist insbesondere dann der Fall, wenn der Zylinder mit umlaufenden Nuten versehen ist.

Bei der hier gezeigten Vorrichtung handelt es sich um einen wesentlichen Anwendungsfall des erfindungsgemäßen Zylinders. Es sind auch andere Fälle denkbar, entscheidend ist, daß er dort eingesetzt wird, wo eine Faserstoffsuspension mit Bestandteilen, die zum Anhaften neigen, auf den Zylinder in flüssiger Form aufgetragen mit einem wasserdurchlässigen Sieb angedrückt wird.

## Patentansprüche

1. Vorrichtung zum Entwässern einer verunreinigten, insbesondere aus Altpapier gewonnenen Faserstoffsuspension (S),
mit mindestens einem Zylinder (1)
mit einem umlaufenden Siebband (3), welches den Zylinder (1) zumindest teilweise umschlingt,
mit mindestens einer Zuführvorrichtung (5), welche die Faserstoffsuspension (S) in den keilförmigen Zwischenraum zwischen dem Zylinder (1) und dem auflaufenden Siebband (3) einführt,
indem die Faserstoffsuspension (S) in einer Schicht aufgetragen wird, welche in direktem Kontakt mit der radial äußeren Oberfläche des Zylinders (1) steht, wobei diese Schicht zwischen dem Zylinder (1) und dem umlaufenden Siebband (3) zusammengedrückt wird,
**dadurch gekennzeichnet,**
**daß** die Oberfläche des Zylinders (1) mit einer Keramikschicht (2) versehen ist.

2. Vorrichtung nach Anspruch 1,
**dadurch gekennzeichnet,**
**daß** die Mantelfläche des Zylinders (1) geschlossen ist.

3. Vorrichtung nach Anspruch 1,
**dadurch gekennzeichnet,**
**daß** die Mantelfläche des Zylinders (1) mit Rillen versehen ist.

4. Vorrichtung nach Anspruch 1, 2 oder 3,
**dadurch gekennzeichnet,**
**daß** die Keramikschicht (2) des Zylinders (1) eine Dicke zwischen 0,5 und 2 mm hat.

5. Vorrichtung nach Anspruch 1, 2, 3 oder 4,
**dadurch gekennzeichnet,**
**daß** die Keramikschicht (2) des Zylinders (1) durch Plasma-Aufspritzen gebildet ist.

6. Vorrichtung nach Anspruch 1, 2, 3, 4 oder 5,
**dadurch gekennzeichnet,**
**daß** die Keramikoberfläche glatt geschliffen ist.

7. Vorrichtung nach einem der voranstehenden Ansprüche,
**dadurch gekennzeichnet,**
**daß** der Mantel des Zylinders (1) wasserundurchlässig ist.

8. Vorrichtung nach einem der voranstehenden Ansprüche,
**dadurch gekennzeichnet,**
**daß** die Zuführvorrichtung (5) eine Breitstrahldüse aufweist.

9. Vorrichtung nach einem der voranstehenden Ansprüche,
**dadurch gekennzeichnet,**
**daß** zur Entnahme des im Betrieb auf dem Zylinder gebildeten eingedickten Faserstoffes (S1) ein Schaber (7) vorhanden ist.

10. Vorrichtung nach Anspruch 9,
**dadurch gekennzeichnet,**
**daß** der Schaber (7) aus Faser-Kunststoff-Verbundmaterial besteht.

11. Vorrichtung nach einem der voranstehenden Ansprüche,
**dadurch gekennzeichnet,**
**daß** die Ablauflinie des Siebbandes vom Zylinder (1) im Bereich der unteren Zylinderhälfte, und zwar vor der tiefsten Stelle des Zylinders, in dessen Drehrichtung betrachtet, angeordnet ist,

## Claims

1. Device for dewatering a contaminated fibrous material suspension (S), in particular obtained from waste paper,
having at least one cylinder (1),
having a rotating screen belt (3) which loops around the cylinder (1) at least partially,
having at least one supply device (5) which introduces the fibrous material suspension (S) into the wedge-shaped intermediate space between the cylinder (1) and the ascending screen belt (3),
in that the fibrous material suspension (S) is applied in a layer, which is in direct contact with the radially outer surface of the cylinder (1),
this layer being compressed between the cylinder (1) and the rotating screen belt (3),
**characterised in that**
the surface of the cylinder (1) is provided with a ceramic layer (2).

2. Device according to claim 1,
**characterised in that**
the outer peripheral surface of the cylinder (1) is closed.

3. Device according to claim 1,
**characterised in that**
the outer peripheral surface of the cylinder (1) is provided with grooves.

4. Device according to claim 1, 2 or 3,
**characterised in that**
the ceramic layer (2) of the cylinder (1) has a thickness between 0.5 and 2 mm.

5. Device according to claim 1, 2, 3 or 4,
**characterised in that**
the ceramic layer (2) of the cylinder (1) is formed by plasma-spraying.

6. Device according to claim 1, 2, 3, 4 or 5,
**characterised in that**
the ceramic surface is ground smooth.

7. Device according to one of the preceding claims,
**characterised in that**
the casing of the cylinder (1) is water-impermeable.

8. Device according to one of the preceding claims,
**characterised in that**
the supply device (5) has a wide-beam nozzle.

9. Device according to one of the preceding claims,
**characterised in that**
a scraper (7) is present in order to remove the thickened, fibrous material (S1) which is formed on the cylinder during operation.

10. Device according to claim 9,
**characterised in that**
the scraper (7) is made of fibre-plastic composite material.

11. Device according to one of the preceding claims,
**characterised in that**
the discharge line of the screen belt from the cylinder (1) is disposed in the region of the lower cylinder half, and in fact in front of the lowest position of the cylinder, observed in the rotational direction thereof.

## Revendications

1. Appareil pour l'égouttage d'une suspension fibreuse (S) chargée d'impuretés, notamment récupérée à partir de vieux papiers,
comprenant au moins un cylindre (1),
une bande de tamisage (3) en révolution, qui ceinture au moins partiellement ledit cylindre (1),
au moins un dispositif d'amenée (5) qui introduit la suspension fibreuse (S) dans l'interstice cunéiforme situé entre le cylindre (1) et la bande de tamisage (3) arrivant sur celui-ci,
la suspension fibreuse (S) étant déposée sous la forme d'une couche en contact direct avec la surface radialement extérieure du cylindre (1),
cette couche étant comprimée entre ledit cylindre (1) et la bande de tamisage (3) en révolution,
**caractérisé en ce que**
la surface du cylindre (1) est munie d'une couche de céramique (2).

2. Appareil selon la revendication 1,
**caractérisé en ce que**
la surface périphérique du cylindre (1) est fermée.

3. Appareil selon la revendication 1,
**caractérisé en ce que**
la surface périphérique du cylindre (1) est pourvue de striures.

4. Appareil selon la revendication 1, 2 ou 3,
**caractérisé en ce que**
la couche de céramique (2) du cylindre (1) présente une épaisseur comprise entre 0,5 et 2 mm.

5. Appareil selon la revendication 1, 2, 3 ou 4,
**caractérisé en ce que**
la couche de céramique (2) du cylindre (1) est produite par pulvérisation au plasma.

6. Appareil selon la revendication 1, 2, 3, 4 ou 5,
**caractérisé en ce que**
la surface de la céramique est rendue lisse par meulage.

7. Appareil selon l'une des revendications précédentes,
**caractérisé en ce que**
l'enveloppe du cylindre (1) est imperméable à l'eau.

8. Appareil selon l'une des revendications précédentes,
**caractérisé en ce que**
le dispositif d'amenée (5) possède une buse à jet large.

9. Appareil selon l'une des revendications précédentes,
**caractérisé par**
la présence d'un racleur (7) destiné à l'enlèvement de la matière fibreuse (S1) épaissie, formée en cours de fonctionnement sur le cylindre.

10. Appareil selon la revendication 9,
**caractérisé en ce que**
le racleur (7) est constitué d'un matériau composite fibres-matière plastique.

11. Appareil selon l'une des revendications précédentes,
**caractérisé en ce que**
la ligne de fin de défilement de la bande de tamisage, quittant le cylindre (1), est disposée dans la région de la moitié inférieure dudit cylindre, plus précisément avant la zone la plus basse dudit cylindre considéré dans le sens de rotation de celui-ci.
